# FASCICULE DE BREVET EUROPEEN

(11) **EP 0 576 313 B1**
(45) Date de publication et mention de la délivrance du brevet: **02.04.1997**
(21) Numéro de dépôt: 93401348.3
(22) Date de dépôt: 26.05.1993
(51) Int. Cl.: B29C 65/22, B29C 65/74

(54) **Organe de soudage ou de découpe de films ou sacs en matière plastique, et machine équipée d'un tel organe**
Schweiss- oder Schneidbache für Filme oder Säcke aus plastiken Material und mit dieser Bache ausgerüstetes Gerät
Welding or cutting jaw for plastic films or bags and apparatus provided with this jaw

(30) Priorité: 27.05.1992 FR 9206516
(43) Date de publication de la demande: 29.12.1993
(73) Titulaire: GRACE S.A., F-28230 Epernon (FR)
(72) Inventeur: Fruchard, Michel Marie Arthur Claude, F-28300 Lèves (FR)
(74) Mandataire: Durand, Yves Armand Louis

(56) Documents cités:
- EP-A- 0 280 661
- CH-A- 494 106
- FR-E- 62 159
- GB-A- 1 011 722
- NL-A- 6 806 069
- US-A- 3 323 277
- US-A- 3 748 207
- US-A- 4 341 056

## Description

La présente invention a essentiellement pour objet un organe de soudage ou de découpe de films ou sacs en matière plastique permettant notamment l'emballage de denrées alimentaires.

Elle vise également une machine équipée de cet organe.

On a déjà proposé des machines de types divers pour conditionner des denrées alimentaires à l'aide de sacs ou films minces en matière plastique.

Ces machines comprennent généralement un ou plusieurs organes munis chacun d'un ou plusieurs fils chauffants permettant le soudage et/ou la découpe des sacs ou des fils. De tels organes sont décrits dans CH-A-494106 par exemple.

Lorsque le fil est chauffé, il s'allonge sous l'effet de la dilatation, et c'est pourquoi une extrémité ou les deux extrémités du fil sont généralement fixées sur une pièce qui est montée pivotante sur le support sur lequel prend appui le fil, et qui est constamment sollicitée par un ressort apte à toujours compenser l'allongement en question du fil.

Toutefois, les organes de soudage ou de découpe par fil chauffant proposés jusqu'à maintenant présentent un certain nombre d'inconvénients tenant au fait qu'à la longue, le fil chauffant se casse et qu'il faut le remplacer.

Or, avec les systèmes connus de fixation du fil chauffant sur son support, il se pose de nombreux problèmes tant au montage du fil qu'à son démontage. En effet, les moyens proposés jusqu'à maintenant pour fixer le fil chauffant tout en assurant la compensation de son allongement par dilatation, étaient d'une mise en oeuvre compliquée. Ils exigeaient un personnel qualifié et un outillage spécialement adapté, sans parler du fait que la fixation du fil chauffant était souvent aléatoire. En outre, l'opération de démontage du fil cassé et de montage d'un fil de remplacement exigeait un temps de main d'oeuvre important et représentait par conséquent un coût élevé. Enfin, dans de nombreux cas, il arrivait que l'opérateur se blesse lors de ces opérations.

Aussi, la présente invention a pour but de remédier à ces inconvénients en proposant un organe de soudage ou de découpe d'une conception mécanique simple, peu coûteuse et supprimant tous les problèmes de fiabilité, de personnel et d'outillage rencontrés jusqu'à maintenant.

A cet effet, l'invention a pour objet un organe de soudage ou de découpe de films ou sacs en matière plastique, du type comprenant au moins un fil chauffant dont au moins une extrémité est fixée sur une pièce qui est montée pivotante sur un support sur lequel prend appui le fil, et qui est constamment sollicitée par un ressort apte à compenser l'allongement par dilatation de ce fil, caractérisé en ce que la pièce pivotante est munie d'un élément mobile actionnable par un moyen tel que par exemple une vis pour assurer simultanément la fixation, la mise à longueur et la tension du fil chauffant à l'encontre de la force exercée par le ressort de compensation de l'allongement du fil.

Suivant un mode de réalisation préféré, la pièce pivotante présente la forme d'un étrier, tandis que l'élément mobile est un coulisseau monté entre les branches de cet étrier.

On précisera ici que le coulisseau est traversé par un orifice apte à recevoir le fil chauffant.

Suivant une autre caractéristique de l'invention, la partie de sommet de l'étrier comporte une rainure ou analogue de guidage du fil chauffant, tandis que la partie de sommet du coulisseau est plus étroite que sa partie restante coulissant entre les branches de l'étrier.

Suivant encore une autre caractéristique de l'invention, la vis précitée est vissée dans le coulisseau et traverse librement la base de l'étrier.

On prévoit, suivant une réalisation avantageuse de l'invention, une pièce pivotante en forme d'étrier à chaque extrémité du support.

L'organe de soudage ou de découpe selon cette invention est encore caractérisé en ce que chaque étrier monté pivotant sur le support est muni d'une partie en forme de talon coopérant avec l'extrémité du support et limitant la course de basculement de l'étrier provoquée par le ressort précité qui est monté entre le support et l'étrier.

Mais d'autres caractéristiques et avantages de l'invention, apparaîtront mieux dans la description détaillée qui suit et se réfère aux dessins annexés, donnés uniquement à titre d'exemple, et dans lesquels :
La figure 1 illustre partiellement en coupe verticale et longitudinale un organe de soudage selon cette invention et sur lequel le fil chauffant se trouve en position montée ;
La figure 2 est une vue similaire à la figure 1 mais montrant le fil cassé;
La figure 3 est une vue similaire aux figures 1 et 2, mais montrant le montage par ses extrémités d'un nouveau fil chauffant sur l'organe, ledit fil chauffant étant seulement mis en place et non encore fixé et tendu sur le support qui le reçoit.

Suivant un exemple de réalisation, et en se reportant aux dessins, on voit qu'un organe de soudage ou de découpe de films ou sacs en matière plastique selon cette invention, comprend essentiellement un support 1 aux deux extrémités duquel est montée pivotante par l'intermédiaire d'un axe 2, une pièce 3 permettant le montage et la fixation d'un fil chauffant 4 par ses deux extrémités.

Chaque pièce pivotante 3 présente la forme d'un étrier recevant entre ses deux branches 5 un coulisseau 6 actionnable par une vis 7 ou un autre moyen analogue.

Suivant le mode de réalisation représenté, la vis 7 est vissée dans le coulisseau 6, tandis que la partie restante du fût de la vis traverse librement un orifice 8 ménagé dans la base 9 de l'étrier 3 et débouchant dans l'espace existant entre les deux branches 5 recevant le coulisseau 6, comme on le voit clairement sur les figures.

Pour commander le coulisseau 6, on pourrait parfaitement utiliser un autre moyen que la vis 7, sans sortir du cadre de l'invention. Dans cet ordre d'idées, la vis 7 pourrait être agencée autrement que montré sur les figures pour pouvoir tout aussi bien actionner le coulisseau 6 entre les branches 5 de l'étrier 3.

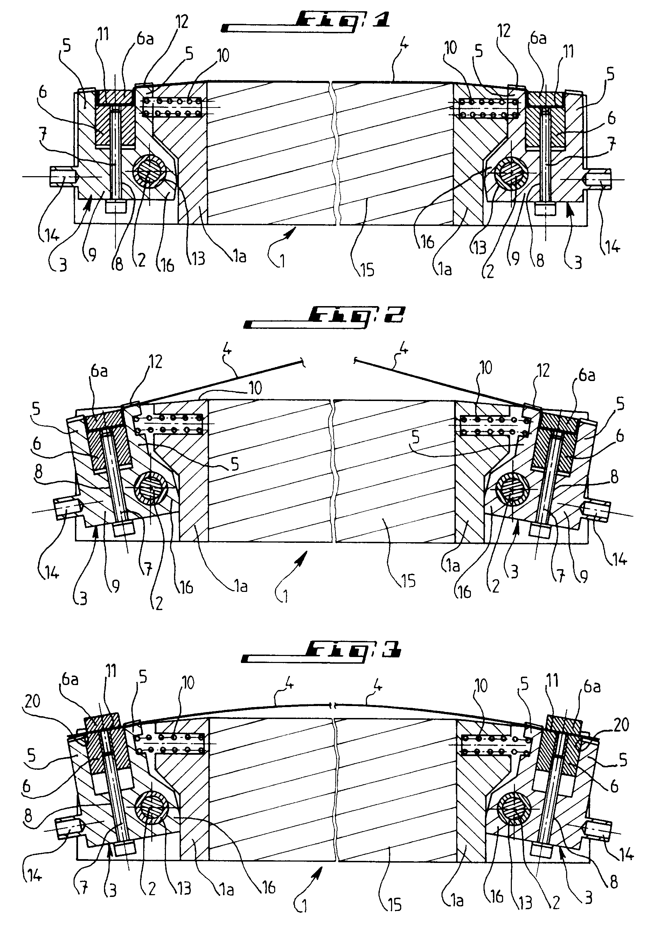

On a montré en 10 sur les figures un ressort monté dans un alésage du support 1 ainsi que dans un alésage de l'une des branches 5 de l'étrier 3, et sollicitant constamment ce dernier dans la position basculée visible notamment sur la figure 2.

Chaque coulisseau 6 est traversé par un orifice 11 apte à recevoir une extrémité du fil chauffant 4.

On observera encore que, comme cela est mieux visible sur la figure 3, la partie de sommet 6a du coulisseau 6 est plus étroite que sa partie restante qui est montée étroitement coulissante entre les branches 5 de l'étrier 3, et cela pour les raisons qui seront expliquées plus loin en détail.

La partie de sommet des deux branches 5 de chaque étrier 3 comporte une rainure ou analogue 12 de guidage du fil chauffant 4, cette rainure permettant un guidage positif dudit fil lors de son montage, comme expliqué ultérieurement.

On a montré en 13 une douille entourant l'axe de pivotement 2 de chaque étrier 3, cette douille étant en un matériau électriquement isolant, de même que les parties d'extrémité 1a du support 1. On observera ici, qu'entre ces parties d'extrémité 1a, est prévue une barre ou analogue 15 qui est de préférence refroidie et sur laquelle prend appui le fil chauffant 4, comme on le voit bien sur la figure 1.

On a montré en 14 les entrées d'un fil électrique apte à réaliser le chauffage du fil chauffant 4, étant entendu que l'étrier pivotant 3, de même que le coulisseau 6 sont en un matériau électriquement conducteur.

Chaque étrier 3 comporte une partie 16 en forme de talon susceptible de coopérer avec les extrémités 1a du support 1 pour limiter la course de pivotement de chaque étrier 3 lorsque le fil chauffant 4 est rompu.

Mais, pour une meilleure compréhension de l'invention, on décrira ci-après comment s'effectue le remplacement d'un fil chauffant cassé à l'aide du système qui vient d'être décrit.

On partira de la position visible sur la figure 1 et dans laquelle le fil chauffant 4 est en état de marche, c'est-à-dire fixé et tendu entre les deux étriers 3 de façon à prendre appui sur le support 1. On comprend donc que, sous l'effet d'une dilatation du fil chauffant 4, les ressorts 10 permettront le maintien de sa tension et de son appui sur le support 1. En bref, le fil chauffant 4 pourra s'allonger et se rétracter à volonté sans pour cela affecter l'efficacité du soudage ou de la découpe du film en matière plastique qui peut être acheminé sur la machine (non représentée) perpendiculairement au plan de la figure 1. Mais, comme expliqué précédemment, le fil chauffant 4 peut se rompre sous l'effet des changements de température fréquents, et comme on le voit bien sur la figure 2.

Dans ce cas, les ressorts 10 compriment les étriers 3 jusqu'à ce qu'ils viennent buter par leurs talons 16 sur les extrémités 1a du support allongé 1.

Pour remplacer le fil, il convient de dévisser les vis 7, ce qui permettra la sortie des coulisseaux 6 d'entre les branches 5 de chaque étrier 3, comme on le voit bien sur la figure 3. A ce stade, l'orifice 11 dans chaque coulisseau 6 sera dégagé de l'intérieur de l'étrier 3, et il suffira d'extraire à la main les deux parties du fil chauffant cassé 4.

Un nouveau fil chauffant sera alors inséré par ses deux extrémités dans les orifices 11 des coulisseaux 6, tout en prenant soin que le fil soit logé dans les rainures 12 au sommet des branches 5 de chaque étrier 3.

Ceci étant fait, on exerce une action de vissage sur les vis 7, ce qui va permettre simultanément la fixation, la mise à longueur et la tension du fil chauffant 4 à l'encontre de la force exercée par les ressorts 10, de sorte que l'on reviendra à la position visible sur la figure 1.

On observera que le vissage des vis 7 provoquera une diminution de la longueur du fil 4, et donc le basculement des étriers 3 en direction des extrémités la du support 1, étant entendu que les extrémités du fil chauffant 4 viendront se loger et se coincer entre les surfaces externes du coulisseau 6 et les surfaces internes des branches 5 de chaque étrier 3, ceci étant facilité par le fait que la partie de sommet 6a de chaque coulisseau 6 est un peu plus étroite que sa partie restante, pour former en quelque sorte un épaulement 20 se situant au niveau de l'orifice 11 de chaque coulisseau 6.

On comprend donc qu'une simple opération de vissage et de dévissage permettra le remplacement d'un fil chauffant cassé, ce qui peut être réalisé, sans aucun danger, par n'importe qui, et en un temps très court.

Bien entendu, l'invention n'est nullement limitée au mode de réalisation décrit et illustré qui n'a été donné qu'à titre d'exemple.

C'est ainsi que l'agencement de la vis de commande du coulisseau dans l'étrier peut être autre que celui représenté. Egalement, on pourrait parfaitement utiliser non pas deux étriers pivotants, mais un seul étrier monté pivotant à l'une des extrémités du support, tandis qu'à l'autre extrémité du support, le fil chauffant serait attaché à un élément quelconque fixe et solidaire du support.

L'invention comprend donc tous les équivalents techniques des moyens décrits ainsi que leurs combinaisons.

## Revendications

1. Organe de soudage ou de découpe de films ou sacs en matière plastique, du type comprenant au moins un fil chauffant (4) dont au moins une extrémité est fixée sur une pièce (3) qui est montée pivotante sur un support (1) sur lequel prend appui le fil (4) et qui est constamment sollicitée par un ressort (10) apte à compenser l'allongement par dilatation de ce fil, caractérisé en ce que la pièce pivotante (3) présente la forme d'un étrier entre les branches (5) duquel est monté un coulisseau (6) qui est traversé par un orifice (11) apte à recevoir le fil chauffant (4) et qui est actionnable par une vis (7) pour assurer simultanément la fixation, la mise à longueur et la tension du fil chauffant (4) à l'encontre de la force exercée par le ressort (10) de compensation de l'allongement du fil.

2. Organe selon la revendication 1, caractérisé en ce que la partie de sommet de l'étrier (3) comporte une rainure ou analogue (12) de guidage du fil chauffant (4), tandis que la partie de sommet (6a) du coulisseau (6) est plus étroite que sa partie restante coulissant entre les branches (5) de l'étrier (3).

3. Organe selon la revendication 1 ou 2, caractérisé en ce que la vis précitée (7) est vissée dans le coulisseau (6) et traverse librement la base (9) de l'étrier (3).

4. Organe selon l'une des revendications précédentes, caractérisé en ce qu'à chaque extrémité du support (1) est montée une pièce pivotante en forme d'étrier (3).

5. Organe selon l'une des revendications précédentes, caractérisé en ce que chaque étrier (3) est muni d'une partie en forme de talon (16) coopérant avec l'extrémité du support (1) et limitant la course de basculement de l'étrier provoquée par le ressort précité (10) qui est monté entre le support (1) et l'étrier (3).

6. Machine équipée d'au moins un organe selon l'une des revendications 1 à 5.

## Claims

1. Member for welding or cutting films or bags of plastics material, of the type comprising at least one heating wire (4) at least one end of which is fastened onto a part (3) which is pivotally mounted onto a support (1) onto which the wire (4) is bearing and which is constantly acted upon by a spring (10) adapted to compensate for the elongation of this wire through expansion, characterized in that the pivoting part (3) exhibits the shape of a yoke between the legs (5) of which is mounted a slide (6) through which extends an aperture (11) adapted to receive the heating wire (4) and which is operable by a screw (7) to simultaneously ensure the fastening, the putting to length and the tensioning of the heating wire (4) against the force exerted by the spring (10) for the compensation for the elongation of the wire.

2. Member according to claim 1, characterized in that the top portion of the yoke (3) comprises a groove or the like (12) for guiding the heating wire (4) whereas the top portion (6a) of the slide (6) is narrower than its remaining portion sliding between the legs (5) of the yoke (3).

3. Member according to claim 1 or 2, characterized in that the aforesaid screw (7) is screwed into the slide (6) and extends freely through the base (9) of the yoke (3).

4. Member according to one of the foregoing claims, characterized in that at each end of the support (1) is mounted a yoke-shaped pivoting part (3).

5. Member according to one of the foregoing claims, characterized in that each yoke (3) is provided with a heel-like portion (16) co-operating with the end of the support (1) and limiting the tilting stroke of the yoke caused by the aforesaid spring (10) which is mounted between the support (1) and the yoke (3).

6. Machine fitted with at least one member according to one of claims 1 to 5.

## Patentansprüche

1. Glied zum Schweissen oder Schneiden von Filmen oder Säcken aus Kunststoff, der wenigstens einen wärmenden Draht (4) aufweisenden Gattung, dessen wenigstens eine Ende an einem Stück (3) befestigt ist, das an einem Halter (1), an welchem sich der Draht (4) abstützt, schwenkbar angeordnet ist und das durch eine zum Ausgleich der Dehnung durch Wärmedehnung dieses Drahtes geeignete Feder (10) fortwährend beaufschlagt wird, dadurch gekennzeichnet, dass das schwenkbare Stück (3) die Gestalt eines Bügels aufweist, zwischen dessen Schenkeln (5) ein Gleitstück (6) angeordnet ist, das durch eine zur Aufnahme des wärmenden Drahtes (4) geeignete Öffnung (11) durchsetzt wird und das durch eine Schraube (7) betätigbar ist, um gleichzeitig die Befestigung, das Ablängen und die Spannung des wärmenden Drahtes (4) entgegen der durch die Feder (10) zum Ausgleich der Dehnung des Drahtes ausgeübten Kraft gleichzeitig zu gewährleisten.

2. Glied nach Anspruch 1, dadurch gekennzeichnet, dass der Kopfteil des Bügels (3) eine Nut oder dergleichen (12) zur Führung des wärmenden Drahtes (4) aufweist, während der Kopfteil (6a) des Gleitstückes (6) schmäler als sein zwischen den Schenkeln (5) des Bügels (3) gleitenden Restteil ist.

3. Glied nach Anspruch 1 oder 2, dadurch gekennzeichnet, dass die vorgenannte Schraube (7) in das Gleitstück (6) eingeschraubt ist und den Grundteil (9) des Bügels (3) frei durchsetzt.

4. Glied nach einem der vorangehenden Ansprüche, dadurch gekennzeichnet, dass an jedem Ende des Halters (1) ein bügelförmiges schwenkbares Stück (3) angeordnet ist.

5. Glied nach einem der vorangehenden Ansprüche, dadurch gekennzeichnet, dass jeder Bügel (3) mit einem absatzförmigen Teil (16) versehen ist, der mit dem Ende des Halters (1) zusammenwirkt und den durch die vorgenannte Feder (10) verursachten Kipphub des Bügels beschränkt, welche zwischen dem Halter (1) und dem Bügel (3) angeordnet ist.

6. Mit wenigstens einem Glied nach einem der Ansprüche 1 bis 5 ausgerüstete Maschine.
